Europäisches Patentamt

European Patent Office

Office européen des brevets

(11) Veröffentlichungsnummer: **0 445 634 A2**

# EUROPÄISCHE PATENTANMELDUNG

(21) Anmeldenummer: **91102884.3**

(22) Anmeldetag: **27.02.91**

(51) Int. Cl.⁵: **B29C 67/14**, B29C 31/04

(30) Priorität: **08.03.90 DE 4007331**

(43) Veröffentlichungstag der Anmeldung:
**11.09.91 Patentblatt 91/37**

(84) Benannte Vertragsstaaten:
**AT BE CH DE ES FR GB IT LI NL SE**

(71) Anmelder: **PHOENIX AKTIENGESELLSCHAFT**
**Hannoversche Strasse 88**
**W-2100 Hamburg 90(DE)**

(72) Erfinder: **Eyerer,Peter,Prof.Dr.-Ing.**
**Friedhofstr.1**
**W-7302 Ostfildern 4(DE)**

(54) **Verfahren zum Herstellen von Bauteilen aus Kunststoff und Elastomeren.**

(57) Verfahren zum Herstellen von Bauteilen aus Kunststoff und Elastomeren mittels Werkzeugen, die einen zu füllenden Formraum anthalten, dadurch gekennzeichnet, daß man an vorgegebenen, kritischen Stellen des herzustellenden Bauteils (16) entsprechenden Stellen des Werkzeuges (10) die Strömungsgeschwindigkeit während des Formfüllvorganges variiert und steuert.

Fig. 1

EP 0 445 634 A2

Die Erfindung bezieht sich auf ein Verfahren zum Herstellen von Bauteilen aus Kunststoff und Elastomeren der im Oberbegriff des Anspruchs 1 genannten Art.

Nach einem derartigen Verfahren werden z.B. Polyurethan-Bauteile im RIM- oder RRIM-Verfahren hergestellt. Bei der Verarbeitung von Polyurethan bei diesem Verfahren haben die Ausgangsmaterialien Polyol und Isocyanat eine im Vergleich zum Spritzgießen erheblich niedrigere Viskosität. Das genannte Verfahren ist dadurch gekennzeichnet, daß in der Regel der einen Komponente Polyol Luft in Mengen von 30 bis 70 Vol.% zugemischt wird und dies in der Dosieranlage auf ca. 200 bar hochgespannt wird. Beide Komponenten Polyol und Isocyanat werden mit ca. 200 bar vermischt, um dann innerhalb von einer Sekunde den Formraum des Werkzeuges zu füllen.

Mit dem Eintritt in das Werkzeug tritt eine schlagartige Entspannung der unter Hochdruck gemischten Komponenten Luft, Polyol und Isocyanat ein, so daß dadurch eine Expansion der verdichteten Luft erfolgt. Die feinverteilten Luftbläschen erzeugen dadurch eine Art Schaum im Innenbereich mit einer dichten Oberfläche gegen die Werkzeugwandung hin. Bei der Herstellung von Bauteilen aus Polyurethan in beschriebener Weise ist es problematisch, eine möglichst glatte, porenfreie Oberfläche der Bauteile zu erreichen, deren Güte den Ansprüchen an die Lackierfähigkeit genügt. Häufig ergeben sich Oberflächenporen, die eine aufwendige Oberflächennachbehandlung erforderlich machen.

Der Erfindung liegt die Aufgabe zugrunde, ein Verfahren der eingangs genannten Art zu schaffen, das die Herstellung von Bauteilen mit verbesserter Oberflächengüte ermöglicht.

Die Aufgabe ist bei einem Verfahren der eingangs genannten Art gemäß der Erfindung durch die Merkmale im Kennzeichnungsteil des Anspruchs 1 gelöst. Vorteilhafte Weiterbildungen dazu ergeben sich aus den Ansprüchen 2 bis 6.

Der Erfindung liegt die Erkenntnis zugrunde, daß beim beschriebenen Verfahren die Entstehung von Poren abhängig von Fließwegen und Fließgeschwindigkeiten im Werkzeug ist, bevorzugt an Stellen mit Wanddickenunterschieden des herzustellenden Bauteiles, also dort, wo eine Verlangsamung der Strömungsgeschwindigkeit entsteht. Das erfindungsgemäße Verfahren macht es möglich, ortsabhängig und zeitabhängig die Wanddicke des herzustellenden Bauteiles z.B. an dessen Rückseite während des Formfüllvorganges zu verjüngen und gegen Ende des Formfüllvorganges wieder zu normalisieren und dadurch die Strömungsgeschwindigkeit an den jeweils kritischen Bauteilstellen zielgerichtet zu steuern.

Eine weitere vorteilhafte Aufgabenlösung enthält Anspruch 7 mit einer vorteilhaften Ausgestaltung dazu gemäß Anspruch 8. Es ist ratsam, den partiellen Nachdruck gegen Ende des Formfüllvorganges/Erstarrungsvorganges (chemische Vernetzung bei Duroplasten und Elastomeren - Erstarrung infolge Abkühlung von Thermoplasten ) aufzubringen. Der partielle Nachdruck kann sich durchaus weit über den Wirkungsort und die Geometrie der Nachdruckfläche hinaus auswirken. Bevorzugt wird der partielle Nachdruck angußfern vorgenommen, weil dort das Porenproblem infolge der langen zurückgelegten Fließwege und damit der Abfall der Strömungsgeschwindigkeit am größten ist. Lange Wege bedingen auch einen beträchtlichen Druckabfall im Werkzeug. Die ursprünglich fein verteilten Gasmikrobläschen blähen sich auf, klumpen zu Blasen zusammen und gelangen verstärkt an die Oberfläche, wo sie zum Problem für eine angestrebte hohe Oberflächengüte werden. Mit Hilfe eines örtlich begrenzten Nachdrucks, bevorzugt angußfern. kann diesem Vorgang entgegengewirkt werden. Dabei ist sehr genau der Zeitpunkt zu beachten, zu dem der partielle Nachdruck aufgebracht wird. Es ist vorteilhaft, hierzu solche Steuerungen einzusetzen, die im Kurzzeit-Bereich reproduzierbar arbeiten. Aufgrund des aufgebrachten partiellen Nachdrucks wird die Oberflächengüte erhöht. Die Porenbildung wird vermindert. Außerdem kann durch den örtlichen Nachdruck z.B. die Dichte des Bauteiles in dieser Region angehoben werden. Dadurch werden die bei heutiger Werkzeugtechnik meist deutlich unterschiedlichen Eigenschaften am angußfreien Bauteilende positiv beeinflußt. Es können homogene Bauteileigenschaften über dessen Länge oder aber gezielt gewollte örtlich unterschiedliche Eigenschaften erreicht werden. Dabei versteht es sich, daß das Aufbringen des partiellen Nachdrucks als alleinige Maßnahme zur Aufgabenlösung bereits ausreichend sein kann, weil bereits dadurch eine verbesserte Oberflächengüte erzielbar ist. Statt dessen kann die Aufbringung des partiellen Nachdrucks aber auch als zusätzliche Maßnahme zusätzlich zur Erhöhung der Fließgeschwindigkeit durch eine quer zur Fließrichtung verlaufende Verengung des Formquerschnitts vorgenommen werden, wodurch umsomehr eine Auflösung von Gasblasen bewirkt wird. Beides liegt im Rahmen der Erfindung.

Weitere vorteilhafte Ausgestaltungen des erfindungsgemäßen Verfahrens ergeben sich aus den Ansprüchen 9 - 12. Daraus wird deutlich, daß die Erfindung nicht nur für luftbeladene Polyurethan-RIM/RRIM-Systeme geeignet ist, sondern sich allgemein für ähnliche niedrigviskose luftbeladene, stickstoffbeladene oder mit anderen Gasen beladene Systeme verwendbar ist und sich auch dort Orientierungsvorgänge beim Formfüllvorgang in einfacher Weise beeinflussen lassen. In gleicher Weise lassen sich mit dem erfindungsgemäßen Verfahren ortsabhängig auch Orientierungszustände beim Spritzgießverfahren steuern. Hier ist lediglich den im Vergleich zum Polyurethan-RIM/RRIM-Verfahren wesentlich höheren Drücken Rechnung zu tragen. Das erfindungsgemäße Verfahren ist außerdem auch beim Fließpressen, z.B. glasmattenverstärkter Thermoplaste, oder beim SMC-(sheet molding compound) Pressen einsetzbar, wo ebenfalls ortsabhängige Fließ- und Orientierungsvorgänge in erfindungsgemäßer Weise gesteuert werden können. Das erfindungsgemäße Verfahren ist außerordentlich einfach und ohne großen werkzeugseitigen Aufwand durchführbar. Vorteilhaft ist dabei ferner, daß die mechanischen Gütewerte des Bauteils, insbesondere die Bauteilsteifigkeit und Bauteilfestigkeit, in keiner Weise beeinträchtigt werden.

Die Erfindung bezieht sich ferner auf eine Vorrichtung zum Herstellen von Bauteilen aus Kunststoff und Elstomeren der im Oberbegriff des Anspruchs 13 genannten Art. Der Erfindung liegt hinsichtlich dieser Vorrichtung die gleiche Aufgabe, die eingangs angegeben ist, zugrunde. Diese Aufgabe ist bei einer solchen Vorrichtung erfindungsgemäß durch die Merkmale im Kennzeichnungsteil des Anspruchs 13 gelöst. Vorteilhafte weitere Erfindungsmerkmale und Ausgestaltungen dazu enthalten die Ansprüche 14 - 43 . Das so ausgestaltete Werkzeug ist relativ einfach und betriebssicher. Es bedingt keinen großen Zusatzaufwand, so daß auch vorhandene Werkzeuge je nach Einzelfall nachträglich dementsprechend ohne größeren Aufwand, insbesondere ohne größere Kosten, umgerüstet werden können.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:

Fig. 1
einen schematischen Schnitt eines Teiles eines Werkzeuges zum Herstellen von Bauteilen aus Kunststoff gemäß einem ersten Ausführungsbeispiel,

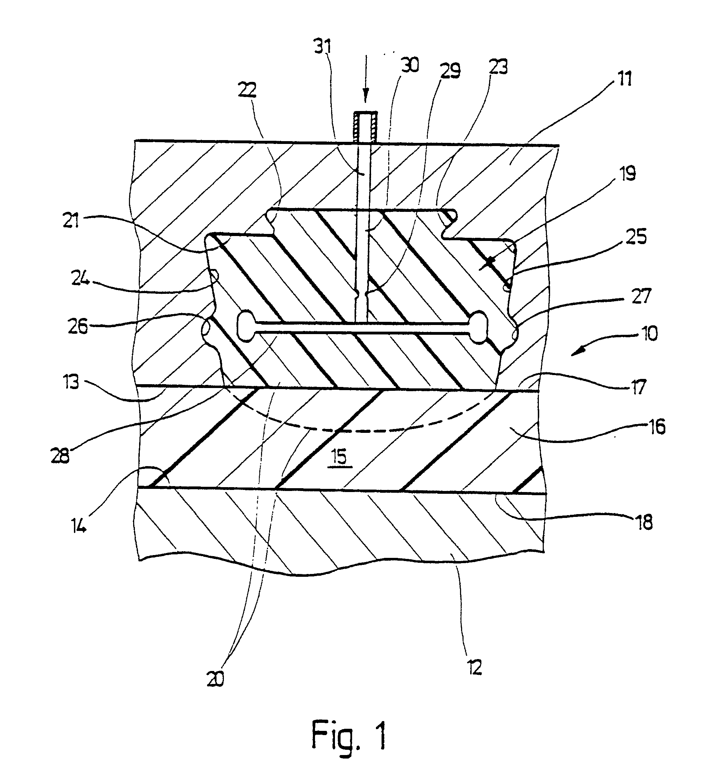

Fig. 2 bis Fig. 5
jeweils einen schematischen Schnitt entsprechend demjenigen in Fig. 1 eines Werkzeuges gemäß einem zweiten bzw. dritten bzw. vierten bzw. fünften Ausführungsbeispiel.

Beim ersten Ausführungsbeispiel in Fig. 1 ist der hier interessierende Teil eines Werkzeuges 10 zum Herstellen von Bauteilen aus Kunststoff gezeigt. Das Werkzeug 10 ist zumindest zweiteilig und weist einen oberen Werkzeugteil 11 und einen unteren Werkzeugteil 12 auf, die mit ihren einander zugewandten Flächen Formraumwandungen 13 bzw. 14 bilden, die einen Formraum 15 dazwischen definieren. Die Formraumwandungen 13 und 14 sind so gestaltet, wie es das im Formraum 15 herzustellende, in Fig. 1 im Schnitt ebenfalls schematisch mit 16 angedeutete Bauteil aus Kunststoff hinsichtlich seiner Bauteilrückseite 17 bzw. Bauteilvorderseite 18 erfordert.

Beim Bauteil 16 aus Kunststoff handelt es sich beispielsweise um ein Bauteil 16 aus Polyurethan. Das Werkzeug 10 ist Teil einer Vorrichtung für die Verarbeitung von Polyurethan im RIM/RRIM-Verfahren. Es handelt sich hier um luftbeladene Systeme.

Die Verarbeitung von Polyurethan im RIM/RRIM-Verfahren ist dadurch gekennzeichnet, daß die Ausgangsmaterialien Polyol und Isocyanat eine im Vergleich zum Kunststoffspritzgießen niedrige Viskosität haben. Bei diesem Verfahren wird in der Regel der Komponente Polyol Luft in Mengen von 30 bis maximal 70 Vol.% zugemischt und diese in der Dosieranlage auf ca. 200 bar hochgespannt. Im Mischkopf werden die beiden Komponenten Polyol und Isocyanat mit ca. 200 bar vermischt, um dann innerhalb von einer Sekunde den Formraum 15 des Werkzeuges 10 zu füllen. Mit dem Eintritt in den Formraum 15 des Werkzeuges 10 tritt eine schlagartige Entspannung der unter Hochdruck gemischten Komponenten Luft, Polyol und Isocyanat ein, so daß dadurch eine Expansion der verdichteten Luft erfolgt. Die feinverteilten Luftbläschen erzeugen dadurch eine Art Schaum im Innenbereich mit einer dichten Oberfläche gegen die Formraumwandungen 13 und 14 hin. Bei dieser Herstellung von Bauteilen 16 aus Polyurethan im RIM/RRIM-Verfahren soll eine lackierfähige Oberflächengüte auf der Bauteilvorderseite 18 und möglichst auch auf der Bauteilrückseite 17 erreicht werden. Luftporen, bevorzugt an bestimmten Stellen im Formraum 15 des Werkzeuges 10 auftretend, führen häufig zur Entstehung von Poren an den Oberflächen des Bauteiles 16. Um der Forderung nach lackierfähiger Oberflächengüte zu entsprechen, ist dann an diesen Stellen häufig eine unwirtschaftliche Oberflächennachbehandlung notwendig. Diese geschilderten Nachteile sind bei dem gezeigten luftbeladenen Werkzeug 10 durch die nachfolgend erläuterten Maßnahmen in einfacher Weise beseitigt.

Im Werkzeug 10 ist zumindest ein Einsatz 19 enthalten, der mindestens einen ortsveränderbaren Flächenteil 20 aufweist. Beim gezeigten Ausführungsbeispiel ist der Einsatz 19 vorzugsweise im oberen Werkzeugteil 11 enthalten, mit dessen Formraumwandung 13 die Bauteilrückseite 17 geformt wird. Der Einsatz 19 ist dort in einer besonders geformten Ausnehmung 21 aufgenommen. Die Aufnahme erfolgt hier mittels Hinterschnitts, also durch Formschluß. Die Ausnehmung 21 weist hierzu in Richtung zur Formraumwandung 13 sich keilförmig verjüngende Wandungen 22 - 25 und innerhalb der Wandungen 24 und 25 auch noch Rücksprünge 26 bzw. 27 auf. Dieser besonderen Form der Ausnehmung 21 entsprechend ist auch der Einsatz 19 geformt. Der Einsatz 19 kann mit Vorteil zumindest im Bereich seines ortsveränderbaren Flächenteiles 20 flexibel und bedarfsweise aufblasbar ausgebildet sein. Durch flexible Ausbildung kann somit der in die Ausnehmung 21 eingebrachte Einsatz 19 sich durch Verformung an die Kontur und Abmessungen der Ausnehmung 21 anpassen. Der Einsatz 19 ist z.B.aus einem Elastomer, z.B. Hartgummiteil, gebildet. Damit er aufgeblasen werden kann, weist er mindestens eine Hohlkammer 28 auf, die bei der Herstellung des Einsatzes 19 durch bestimmte Herstelltechnik eingebracht worden ist. Die Hohlkammer 28 ist mit Vorzug so beschaffen, daß vom Einsatz 19 vor allem der ortsveränderbare Flächenteil 20 aufgeblasen werden kann, so daß er in diesem Zustand die in Fig. 1 mit gestrichelten Linien angedeutete, vorgewölbte Kontur hat. Dabei kann die Hohlkammer 28 im nicht aufgeblasenen Zustand des Einsatzes 19 etwa parallel zur Formraumwandung 13 des Werkzeugteiles 11 ausgerichtet und z.B. als relativ schmale Rechteckkammer geformt sein, die beidseitig links und rechts im Querschnitt größere Kammerabschnitte aufweist. Der Einsatz 19 enthält im Inneren einen über eine angedeutete Düse 29 in die Hohlkammer 28 mündenden Kanal 30. Der Werkzeugteil 11 enthält einen mit dem Kanal 30 in Verbindung stehenden Kanal 31. Über die Kanäle 30, 31 ist die Hohlkammer 28 an eine nicht weiter gezeigte Gasdruckquelle angeschlossen und der Druck steuerbar.

Der im oberen Werkzeugteil 11 formschlüssig gehaltene Einsatz 19 bildet mit dem mindestens einen ortsveränderbaren Flächenteil 20 einen Teil der Formraumwandung 13 dieses Werkzeugteiles 11. Die Gasdruckquelle und das von dieser über die Kanäle 31, 30 in die Hohlkammer 28 eingespeiste Druckmittel bildet eine diesem Einsatz 19, insbesondere seinem ortsveränderbaren Flächenteil 20, zugeordnete Antriebseinrichtung, die auf diesen Flächenteil 20 arbeitet. Mittels dieser Antriebseinrichtung ist der Flächenteil 20 bedarfsweise unter Reduzierung des Querschnittes des Formraumes 15 an dieser Stelle in die in Fig. 1 gestrichelt angedeutete Form verstellbar bzw. gegensinnig dazu unter Normalisierung des Formraumquerschnittes an dieser Stelle in die in Fig. 1 mit durchgezogenen Linien gezeigte Ausgangsstellung verstellbar. In diesem Normalzustand verläuft somit der Flächenteil 20 innerhalb der üblichen Formgebungskontur der Formraumwandung 13. Dagegen steht der Flächenteil im aufgeblasenen Zustand des Einsatzes 19 und im gestrichelt angedeuteten Zustand über diese Formgebungskontur der Formraumwandung 13 über unter Reduzierung des Querschnittes des Formraumes 15 in diesem Bereich.

Auf diese Weise ist es möglich, daß man bei diesem gasbeladenen Werkzeug 10 an vorgegebenen, kritischen Stellen des herzustellenden Bauteiles 16 entsprechenden Stellen des Werkzeuges 10, wo man entsprechende Einsätze 19 beschriebener Art plaziert, die Strömungsgeschwindigkeit der in den Formraum 15 eintretenden Mischung während des Formfüllvorganges variiert und steuert. So kann man die Strömungsgeschwindigkeit zu Beginn des Formfüllvorganges zunächst durch Aktivieren des Einsatzes 19 und Aufblasen des Flächenteiles 20 in die in Fig. 1 gestrichelte Position erhöhen und dann gegen Ende des Formfüllvorganges wieder normalisieren, indem der Flächenteil 20 wieder die in Fig. 1 mit durchgezogenen Linien gezeigte Position einnimmt. Es ist somit möglich, an gewünschten Stellen des Werkzeuges 10 den Querschnitt des Formraumes 15 zu Beginn des Formfüllvorganges zu verringern und gegen Ende des Formfüllvorganges wieder zu normalisieren. Dies kann man mittels der in beschriebener Weise an den Einsatz 19 angeschlossenen Gasdruckquelle durch Gasdruck und/oder Druckflüssigkeit, z. B. Drucköl, bewerkstelligen. So kann man den Gasdruck zusammen mit dem Innendruck im Formraum 15 des Werkzeuges 10 steuern. Dies kann z . B. vorzugsweise mittels einer Hochgeschwindigkeitsregeleinrichtung erfolgen. Besonders vorteilhaft kann es dabei sein, wenn der Innendruck in der Hohlkammer 28 des Einsatzes 19 zu Beginn des Formfüllvorganges größer als der Innendruck im Formraum 15 und gegen Ende des Formfüllvorganges kleiner als der Innendruck im Formraum 15 gewählt wird, wobei dadurch der mindestens eine aufblasbare und vorwölbbare Flächenteil 20 des Einsatzes 19 zu Beginn des Formfüllvorganges vorgewölbt ist und dadurch der Formraumquerschnitt verringert wird und gegen Ende des Formfüllvorganges wieder in seinem Normalzustand innerhalb der übrigen Formgebungskontur der Formraumwandung 13 verläuft.

Das erfindungsgemäße Werkzeug macht es somit möglich, ortsabhängig die Wanddicke des herzustellenden Bauteiles 16 durch den Einsatz 19 an der Bauteilrückseite 17 während des Formfüllvorganges zu verjüngen und gegen Ende des Formfüllvorganges wieder zu normalisieren und dadurch eine Steuerung der Strömungsgeschwindigkeit an kritischen Stellen des herzustellenden Bauteiles 16 vorzunehmen. Auf diese Weise kann man die Fließwege und Fließgeschwindigkeiten im Formraum 15 des Werkzeuges 10 bei der Formfüllung so beeinflussen, daß die Entstehung von Poren an der Oberfläche des herzustellenden Formteiles 16 vermieden ist. Dies läßt sich ortsabhängig und zeitanhängig während des Formfüllvorganges durchführen. Auf diese Weise wird die Entstehung von Poren und somit eine unbefriedigende Oberflächengüte verhindert, ohne daß dies etwa einen nachteiligen Einfluß auf die mechanischen Gütewerte des so hergestellten Bauteiles 16, insbesondere die Bauteilsteifigkeit und Bauteilfestigkeit, hat.

Auch wenn vorstehend die Erfindung anhand luftbeladener Polyurethan RIM/RRIM-Systeme beschrieben worden ist, läßt sie sich allgemein für ähnliche niedrigviskose luftbeladene, stickstoffbeladene oder mit anderen Gasen beladene Systeme verwenden. So gibt es auch im Spritzgießverfahren deutlich niedrigerviskose Schmelzen. Erfindungsgemäße Werkzeuge sind auch hier einsetzbar, um Orientierungsvorgänge beim Formfüllvorgang zu beeinflussen. Bei der Anwendung beim Spritzgießen kann man mittels erfindungsgemäßer Werkzeuge ortsabhängig Orientierungszustände steuern. Werkzeugseitig, insbesondere hinsichtlich des Einsatzes 19, ist dabei den beim Spritzgießen im Vergleich zum Polyurethan RIM/RRIM-Verfahren beträchtlich höheren Drücken im Formraum 15 Rechnung zu tragen. Außerdem kann der Erfindungsgedanke auch beim Fließpressen, insbesondere glasmattenverstärkter Thermoplaste, Anwendung finden, da auch hier ortsabhängige Fließ- und damit Orientierungsvorgänge eine wichtige Rolle für die späteren Bauteileigenschaften spielen, so daß man letztere auch hier durch ortsabhängiges Steuern der Orientierungszustände günstig beeinflussen kann.

Von Vorteil ist es, wenn man die Strömungsgeschwindigkeit variiert, insbesondere die quer zur Fließrichtung verlaufende Verengung zur Erhöhung der Fließgeschwindigkeit und Auflösung von Gasblasen vornimmt, solange die Formmasse noch fließfähig ist, wobei die Verengung dann zurückgenommen wird, um eine Schwächung des herzustellenden Bauteils zu vermeiden.

Nicht besonders ist in Fig. 1 herausgestellt, daß das Werkzeug 10 an bevorzugten Stellen, insbesondere im Bereich des Einsatzes 19, mit einer Heizvorrichtung versehen sein kann. Dadurch ist es möglich, die Strömungsgeschwindigkeit dadurch zu variieren, z.B. zunächst zu erhöhen und danach wieder zu normalisieren, daß man vorgegebene Stellen des Werkzeuges 10 beheizt. Diese Beheizung kann man bevorzugt zeitabhängig steuern. Die Heizvorrichtung kann speziell der Beheizung des Einsatzes dienen. Die Heizvorrichtung kann aus mindestens einem Heißkanal gebildet sein oder als elektrische Heizung ausgebildet und vorzugsweise zeitabhängig steuerbar sein.

Die Möglichkeit der Beheizung des Einsatzes 19 separat zum übrigen Werkzeug 10 ist von weiterer wesentlicher Bedeutung. Insbesondere bei zähflüssigen Thermoplast- und Duroplastschmelzen - aber auch bei PUR-Systemen - wird durch die Wanddickenverjüngung ein beträchtlicher Strömungswiderstand aufgebaut, der einen höheren Einspritzdruck erfordert. Evtl. könnte die quer zur Fließrichtung verlaufende Verengung die vollständige Formfüllung erschweren. All diese Nachteile kann man durch eine Beheizung des Einsatzes 19 beseitigen. Die Beheizung kann z.B. mittels einer Induktionsspule im Einsatz 19 oder durch einen Heißkanal erfolgen. Durch die Beheizung kann im übrigen die Erstarrung oder Verdickung infolge Abkühlung der Schmelze an der Werkzeugwandung örtlich vermindern oder aufgehoben werden. Bei Flüssigkeiten, beispielsweise PUR, läßt sich durch das örtliche Beheizen aufgrund entstehender örtlicher zusätzlicher Viskositätsabnahme eine zusätzliche Veränderung der Strömungsgeschwindigkeit, und zwar eine zusätzliche Erhöhung dieser, erreichen. Zwar erhöht sich dadurch die chemische Reaktionsgeschwindigkeit. Jedoch handelt es sich dabei um Hochgeschwindigkeitsvorgänge, so daß die Beeinflussung der Viskosität überwiegen wird. Eine derartige Heizvorrichtung ist nicht nur bei Einsätzen 19 gemäß dem ersten Ausführungsbeispiel, sondern auch bei Metall- und Kunststoffeinsätzen möglich. Bei Metall- und Keramikeinsätzen kann man zusätzlich, sofern eine elektrische Heizvorrichtung vorgesehen ist, die Beheizung auch noch zeitabhängig steuern, um z.B. Energie zu sparen oder besondere Strömungseffekte, d.h. Viskositätsreduzierungen, zeitabhängig zu erzielen.

Die in Fig. 1 gezeigte Vorrichtung macht es außerdem möglich, insbesondere gegen Ende des Formfüllvorganges an vorgegebenen, kritischen Stellen des herzustellenden Bauteiles 16 entsprechenden Stellen des Werkzeuges 10 einen partiellen Nachdruck auf das zu formende Bauteil auszuüben. Dabei ist es in aller Regel zweckmäßig, die Variierung der Strömungsgeschwindigkeit bzw. das Aufbringen des partiellen Nachdruckes an angußfernen Stellen des Werkzeuges 10 vorzunehmen. Der partielle Nachdruck wird gegen Ende des Formfüllvorganges/Erstarrungsvorganges (chemische Vernetzung bei Duroplasten und Elastomeren bzw. Erstarrung infolge Abkühlung von Thermoplasten) aufgebracht, wobei er sich über die Geometrie der Nachdruckfläche hinaus auswirkt. Dem liegt folgende Überlegung zugrunde. Bevorzugt wird der Einsatz 19 angußfern angeordnet, weil dort das Porenproblem infolge der langen zurückgelegten Fließwege und damit der Abfall der Strömungsgeschwindigkeit am größten sein wird. Lange Wege bedingen auch einen beträchtlichen Druckabfall im Werkzeug 10. Die feinverteilten Gasmikrobläschen blähen sich auf, klumpen zu Blasen zusammen und gelangen verstärkt an die Oberfläche, wo sie zum Problem für eine anzustrebende hohe Oberflächengüte werden. Mit Hilfe eines örtlich begrenzten Nachdruckes, bevorzugt angußfern aufgebracht, kann diesem Vorgang entgegengewirkt werden. Dabei kommt es sehr genau auf den Zeitpunkt an, zu dem der Nachdruck wirkt. Dazu empfehlen sich geeignete Steuerungen, die im Bereich von tausendstel Sekunden reproduzierbar arbeiten. Ferner läßt sich mittels eines örtlichen Nachdruckes z.B. die Dichte der angußfernen Region des Bauteiles 16 anheben. Dadurch lassen sich die bei heutiger Werkzeugtechnik meist deutlich unterschiedlichen Eigenschaften am angußfreien Bauteilende positiv beeinflussen, so daß homogene Bauteileigenschaften über dessen Länge oder aber gezielt gewollte örtliche unterschiedliche Eigenschaften erreicht werden können.

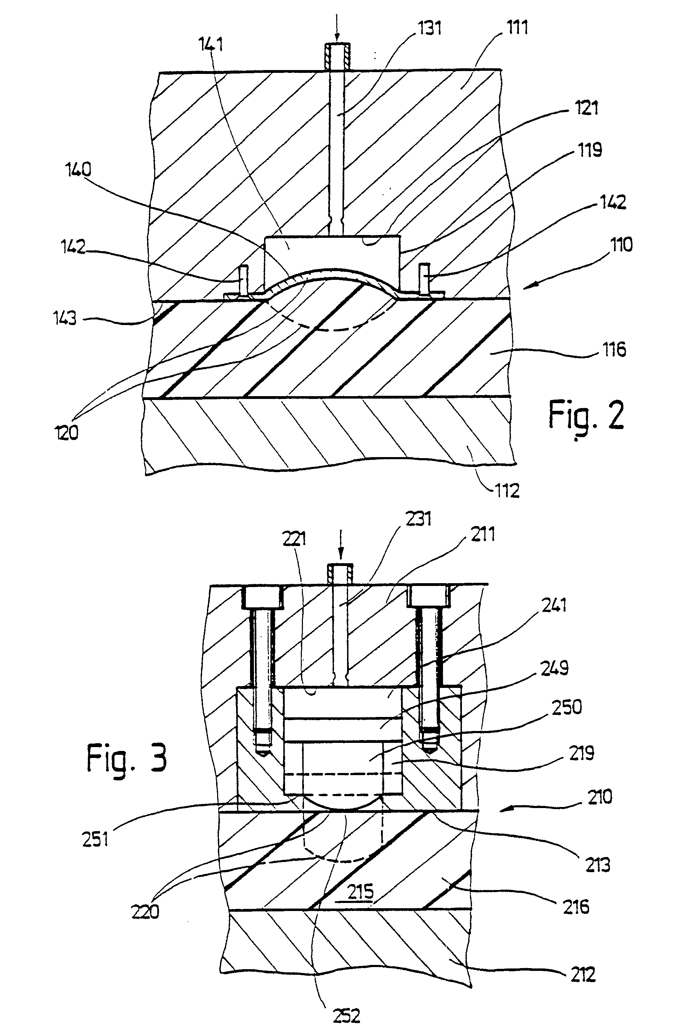

Bei dem in Fig. 2 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Bei diesem zweiten Ausführungsbeispiel in Fig. 2 weist der Einsatz 119 eine Platte 140 auf, die hier den ortsveränderbaren Flächenteil 120 bildet. Die Platte 140 deckt einen rückseitig davon im oberen Werkzeugteil 111 enthaltenen Druckraum 141 ab, der über den Kanal 131 an eine nicht gezeigte Gasdruckquelle angeschlossen ist. Unter dem Druck des Druckmediums im Druckraum 141 ist die Platte 140 ortsverändebar. Die Platte 140 ist aufgrund des Druckes des Druckmediums in die in Fig. 2 gestrichelt angedeutete Form vorwölbbar, so daß dadurch der Querschnitt des Formraumes 15 an dieser Stelle bedarfsweise verringert bzw. durch gegensinnige Rückschnappbewegung der Platte 140 in die Ausgangsstellung wieder normalisiert werden kann. Im einfachsten Fall besteht die Platte 140 z.B. aus einer Feder, insbesondere aus einer metallischen Blattfeder und hierbei z.B. aus einer bistabilen Springfeder, die sich bei Abfall des Druckes im Druckraum 141 federelastisch von selbst wieder in die gezeigte, zum Druckraum 141 hin gewölbte Ausgangsstellung zurückstellen kann. Die Platte 140 ist z.B. beidseitig durch mindestens ein Befestigungselement 142 am Werkzeugteil fixiert. Dies ist nur ein Beispiel für eine unter dem Druck im Druckraum 141 vorwölbbare Platte 140.

Bei dem in Fig. 3 gezeigten dritten Ausführungsbeispiel ist der Einsatz 219 formsteif ausgebildet. Er weist einen Kolben 250 auf, der mit einem Führungsteil 249 innerhalb eines rückseitig davon angeordneten Druckraumes 241 im oberen Werkzeugteil 211 verschiebbar und unter dem Druck des Druckmediums im Druckraum 241 in die mit gestrichelten Linien gezeichnete Stellung ausschiebbar ist. Der Druckraum 241 bildet zugleich den Zylinder, in dem der Kolben 250 mit seinem Führungsteil 249 verschiebbar geführt ist.

Der Druckraum 241 ist über den Kanal 231 im Werkzeugteil 211 an die nicht gezeigte Gasdruckquelle angeschlossen. Beim Ausfahren unter dem Druck des Druckmittels ist der Kolben 250 gegen völliges Ausfahren durch den im Durchmesser größeren Führungsteil 249 gesichert, der dann an einer Schulter 251 im Werkzeugteil 211 anschlägt. Bei einem anderen, nicht gezeigten Ausführungsbeispiel ist der Kolben 250 als Hohlkolben ausgebildet, der in seinem hohlen Inneren den rückseitigen Druckraum enthält, so daß es eines zusätzlichen Druckraumes analog dem Druckraum 241 im oberen Werkzeugteil 211 nicht bedarf, sondern lediglich der Zylinderbohrung für die Aufnahme und Führung des Kolbens. Dadurch kann in Achsrichtung des Kolbens Platz gespart werden.

Die Wirkungsweise des Werkzeuges 110 in Fig. 2 bzw. 210 in Fig. 3 entspricht grundsätzlich derjenigen, die eingangs anhand des in Fig. 1 gezeigten ersten Ausführungsbeispieles ausführlich erläutert ist.

Der Hub des Kolbens 250 , mit dem dieser zur Verengung des Formraumquerschnittes gemäß gesrichelter Linie übersteht, ist z.B. mittels auswechselbarer Zwischenlagen begrenzbar. Diese Zwischenlagen lassen sich z.B. zwischen dem Führungsteil 249 und der Schulter 251 anbringen. Wie ersichtlich ist, bildet der Kolben 250 am in den Formraumquerschnitt vorstehenden Ende den Flächenteil 220, wobei dieser an seiner in den Formraum 215 gelangenden Oberseite strömungsgünstig geformt ist, und zwar hier konvex gekrümmt ist. Nicht weiter gezeigt aber vorteilhaft ist es, wenn der Kolben 250, und zwar zumindest dessen ortsveränderbarer Flächenteil 220, zumindest auf der dem Formraum 215 zugewandten Seite eine nicht besonders herausgestellte Verschleißschutzschicht 252 aufweist, die z.B. aus Kunststoff, Keramik od.dgl.besteht. Dadurch ist ein Schutz gegen alle möglichen abrasiven Stoffe geschaffen und die Standfähigkeit des Kolbens 250 erhöht. Derartige abrasive Stoffe sind z.B. im Polyol enthaltene Kurzglasfaser, ferner aber auch Quarz, Talkum od.dgl.

Nicht weiter gezeigt ist eine dem Kolben 250 zugeordnete Heizvorrichtung, mittels der letzterer beheizbar ist. Die Heizvorrichtung ist z.B. als elektrische Heizung ausgebildet und zeitabhängig steuerbar. Hierfür gilt gleiches wie eingangs zum ersten Ausführungsbeispiel in Fig. 1 ausgeführt wurde. Auch mittels des Kolbens 250 kann bedarfsweise ein partieller Nachdruck aufgebracht werden. Auch diesbezüglich gilt gleiches, wie eingangs zum ersten Ausführungsbeispiel in Fig. 1 ausgeführt ist, worauf zur Vermeidung unnötiger Wiederholungen hiermit verwiesen ist.

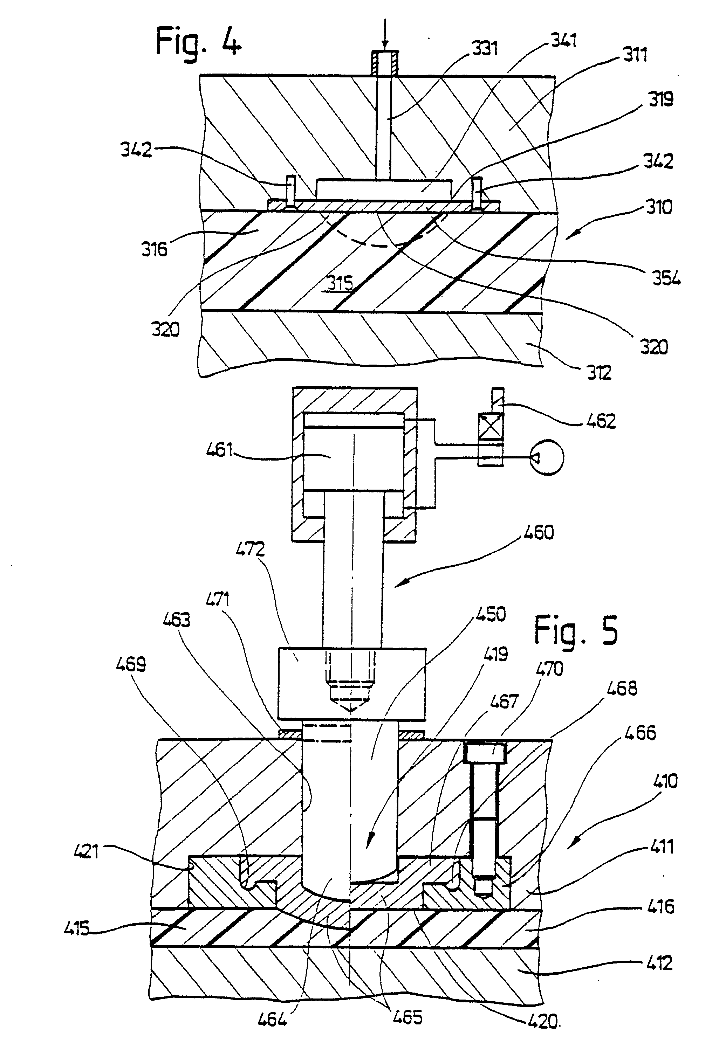

Bei dem in Fig. 4 gezeigten vierten Ausführungsbeispiel ist der Einsatz 319 so wie beim ersten Ausführungsbeispiel in Fig. 1 flexibel ausgebildet. Er weist eine Membran 354 auf, die auf der dem Formraum 315 zugewandten Seite den Flächenteil 320 trägt und auf dieser Seite ebenfalls mit einer nicht weiter gezeigten Verschleißschutzschicht versehen sein kann. Die Membran 354 deckt einen rückseitig daran angeordneten Druckraum 341 ab, der über den Kanal 331 im Werkzeugteil 311 an die nicht gezeigte Gasdruckquelle angeschlossen ist. Die Membran 354 ist am Werkzeugteil 211 mittels Befestigungselementen 342 fixiert. Sie ist unter dem Druck des Druckmediums im Druckraum 341 elastisch in die mit gestrichelten Linien gezeichnete Stellung auswölbbar. Fällt dieser Druck im Druckraum 341 ab, so ist die Membran 354 unter dem im Formraum 315 herrschenden Gegendruck in dazu gegensinniger Richtung in die dargestellte Ausgangsstellung zurückstellbar. Da die Membran 354 unter dem Druck im Druckraum 341 in die gestrichelte Position vorwölbbar ist, ergibt sich auch dabei ein strömungsgünstiges Profil. Bei einem anderen, nicht gezeigten Ausführungsbeispiel ist als plattenförmige Membran 354 gemäß Fig. 4 z.B. eine Rollmembran oder ähnliches vorgesehen. Die Membran 354 ist zumindest in Grenzen elastisch. Sie besteht z.B. aus einem Elastomer, Kunststoff od.dgl. Hinsichtlich weiterer Besonderheiten, insbesondere der Verschleißschutzschicht und der Heizvorrichtung, wird auf die vorangehende Beschreibung verwiesen, wobei auch diese zusätzlichen Merkmale beim vierten Ausführungsbeispiel gemäß Fig. 4 ebenfalls gegeben sein können.

Allen bisher erläuterten Ausführungsbeispielen gemäß Fig. 1 - 4 ist hinsichtlich der Betätigung des Einsatzes gemeinsam, daß die Betätigung durch rückseitig aufgebrachten Druck erfolgt, der eine Bewegung in die den Formraumquerschnitt verengende Position zur Folge hat, die jeweils gestrichelt angedeutet ist, während die Rückstellung z.B. unter dem Gegendruck im Formraum allein geschieht oder letzterer der Auslöser für die Rückstellung ist, was z.B. für das Ausführungsbeispiel in Fig. 2 gilt.

Bei dem in Fig. 5 gezeigten fünften Ausführungsbeispiel ist statt dessen eine auf den Einsatz 419 arbeitende besondere Antriebseinrichtung 460 vorgesehen. Diese weist einen Hydraulikzylinder 461 auf, der mittels eines angedeuteten schnellen Servoventils 462 gesteuert ist.

Im übrigen ähnelt das fünfte Ausführungsbeispiel gemäß Fig. 5 dem dritten Ausführungsbeispiel in Fig. 3. Es besteht jedoch folgender Unterschied. Während beim dritten Ausführungsbeispiel in Fig. 3 der dortige Kolben 250 an seinem Ende den Flächenteil 220 bildet, ist beim fünften Ausführungsbeispiel in Fig. 5 der Kolben 450 in einer Bohrung 463 des Werkzeugteils 411 verschiebbar geführt, wobei der Kolben 450 mit seinem Ende 464, das ebenfalls nach außen konvex gekrümmt ist, gegen eine fest eingespannte Membran 465 drückt und diese zur Verengung des Querschnitts des Formraumes 415 vorwölbt, wie die Darstellung in Fig. 5, links der Mittellinie zeigt. Im zurückgezogenen Zustand des Kolbens 450, der in Fig. 5 rechts der Mittellinie gezeigt ist, schließt die Membran 465 etwa mit der dem Formraum 415 zugewandten Fläche des Werkzeugteils 411 ab. Beim fünften Ausführungsbeispiel gemäß Fig. 5 weist somit die Membran 465 den ortsveränderbaren Flächenteil 420 auf.

Die Membran 465 ist mittels eines Rahmens 466, der am Werkzeugteil 411 auswechselbar gehalten ist, randseitig kraft- und/oder formschlüssig gehalten. Die Membran 465 ist z.B. im entlasteten Zustand zumindest in etwa napfförmig gestaltet, wobei der Randteil 467 vom Rahmen 466 von unten her untergriffen und gegen die Innenseite einer Anlagefläche im Werkzeugteil 411 angedrückt ist. Im Bereich des Randteiles 467 weist die Membran 465 eine in Richtung zum Formraum 415 vorstehende Wulst 468 auf, die in einer entsprechenden Aufnahme 469 des Rahmens 466 aufgenommen ist. Auf diese Weise ist eine formschlüssige Halterung gegeben. Es versteht sich, daß die Verhältnisse auch kinematisch umgekehrt sein können. Die Membran 465 besteht z. B. aus einem Elastomer. Sie kann vorzugsweise auf der dem Formraum 415 zugewandten Seite mit einer Verschleißschutzschicht versehen sein. Der Rahmen 466 ist in einer Ausnehmung 421 des Werkzeugteils 411 auswechselbar aufgenommen und dort mittels Schrauben 470 fixiert. Auf diese Weise ist der Rahmen 466 mit der Membran 465 leicht auswechselbar. Der Hub des Kolbens 450 ist einstellbar und begrenzbar. Zur Hubbegrenzung dienen z.B. auswechselbare Zwischenlagen 471, die rückseitig zwischen dem Werkzeugteil 411 und einem im Durchmesser größeren Endabsatz 472 des Kolbens 450 angeordnet werden können und dort auswechselbar sind.

Auch für dieses fünfte Ausführungsbeispiel in Fig. 5 gelten ansonsten die übrigen Besonderheiten, die eingangs bereits erläutert sind. Die Wirkungsweise des Werkzeuges 410 entspricht ebenfalls derjenigen der vorangegangenen Ausführungsbeispiele.

**Patentansprüche**

1. Verfahren zum Herstellen von Bauteilen aus Kunststoff und Elastameren mittels Werkzeugen, die einen zu füllenden Formraum enthalten, **dadurch gekennzeichnet,** daß man an vorgegebenen, kritischen Stellen des herzustellenden Bauteiles (16; 116;216;316;416) entsprechenden Stellen des Werkzeuges (10;110;210;310;410) die Strömungsgeschwindigkeit während des Formfüllvorganges variiert und steuert.

2. Verfahren nach Anspruch 1, **dadurch gekennzeichnet,** daß man an den vorgegebenen Stellen die Strömungsgeschwindigkeit zu Beginn des Formfüllvorganges zunächst erhöht und gegen Ende des Formfüllvorganges wieder normalisiert.

3. Verfahren nach Anspruch 1 oder 2, **dadurch gekennzeichnet,** daß man die Strömungsgeschwindigkeit dadurch variiert, insbesondere zunächst erhöht und danach wieder normalisiert, daß man vorgegebene Stellen des Werkzeuges (10;110;210;310;410) beheizt, wobei man vorzugsweise die Beheizung zeitabhängig steuert.

4. Verfahren nach Anspruch 1 oder 2, **dadurch gekennzeichnet,** daß man an den vorgegebenen Stellen den Formraumquerschnitt des Werkzeuges (10; 110;210;310;410) zu Beginn des Formfüllvorganges verringert und gegen Ende des Formfüllvorganges wieder normalisiert.

5. Verfahren nach einem der Ansprüche 1 - 4, **dadurch gekennzeichnet,** daß man die Strömungsgeschwindigkeit variiert, solange die Formmasse noch fließfähig ist.

6. Verfahren nach Anspruch 4 oder 5, **dadurch gekennzeichnet,** daß man den Formraumquerschnitt durch Gasdruck verringert und danach normalisiert, vorzugsweise zusammen mit dem Innendruck im Werkzeug (10; 110;210;310;410).

7. Verfahren zum Herstellen von Bauteilen aus Kunststoff mittels gasbeladener Werkzeuge, die einen zu füllenden Formraum enthalten, **dadurch gekennzeichnet,** daß man insbesondere gegen Ende des Formfüllvorganges an vorgegebenen, kritischen Stellen des herzustellenden Bauteiles (16;116;216;316;416) entsprechenden Stellen des Werkzeuges (10;110;210;310;410) einen partiellen Nachdruck auf das zu formende Bauteil (16; 116; 216;316;416) ausübt.

8. Verfahren nach einem der Ansprüche 1 - 7, **dadurch gekennzeichnet,** daß man die Variierung der Strömungsgeschwindigkeit bzw. das Aufbringen des partiellen Nachdruckes an angußfernen Stellen des Werkzeuges (10;110;210;310;410) vornimmt.

9. Verfahren nach einem der Ansprüche 1 - 8, **gekennzeichnet durch** die Anwendung bei luft-, stickstoff- oder anderen gasbeladenen Systemen.

10. Verfahren nach einem der Ansprüche 1 - 9, **gekennzeichnet durch** die Anwendung bei luftbeladenen Polyurethan- Systemen.

11. Verfahren nach einem der Ansprüche 1 - 9, **gekennzeichnet durch** die Anwendung beim Spritzgießen.

12. Verfahren nach einem der Ansprüche 1 - 9, **gekennzeichnet durch** die Anwendung beim Fließpressen, insbesondere glasmattenverstärkter Thermoplaste.

13. Vorrichtung zum Herstellen von Bauteilen aus Kunststoff und Elastomeren mittels Werkzeugen, die einen zu füllenden Formraum enthalten, **dadurch gekennzeichnet,** daß im Werkzeug (10;110;210;310;410) zumindest ein Einsatz (19;110;219;319;419) enthalten ist, der mindestens einen ortsveränderbaren, einen Teil der Formraumwandung (13; 113;213) bildenden Flächenteil (20;120;220;320;420) aufweist.

14. Vorrichtung nach Anspruch 13, **gekennzeichnet durch** eine auf zumindest den Flächenteil (20;120;220;320;420) arbeitende Antriebseinrichtung (28 - 31; 131,141,140;231,241,250;331,341,354;460), mittels der der Flächenteil (20;120;220;320;420) bedarfsweise unter Reduzierung des Formraumquerschnittes an dieser Stelle zumindest in diese Richtung verstellbar ist.

15. Vorrichtung nach Anspruch 13 oder 14, **dadurch gekennzeichnet,** daß der Flächenteil (20; 120;220;320;420) entweder unter dem Gegendruck im Formraum (15;115;215;315) oder mittels der Antriebseinrichtung (460) in gegensinniger Richtung unter Normalisierung des Formraumquerschnittes an dieser Stelle zurückverstellbar ist.

16. Vorrichtung nach einem der Ansprüche 13 - 15, **dadurch gekennzeichnet,**daß der Einsatz (119;219;319;419) eine Platte (140), einen Kolben (250), einen Stempel, eine Membran (354) od.dgl. aufweist, die bzw. der den Flächenteil (120;220;320) aufweist und ortsveränderbar ist.

17. Vorrichtung nach einem der Ansprüche 13 - 16, **dadurch gekennzeichnet,** daß der Einsatz (119;219;319) einen rückseitig davon angeordneten Druckraum (141;241;341) im Werkzeug (10;210;310) abdeckt und unter dem Druck eines Druckmediums im Druckraum (141;241;341) ausschiebbar ist.

18. Vorrichtung nach Anspruch 16 oder 17, **dadurch gekennzeichnet,** daß die Platte (140) bzw. der Kolben (250) od.dgl. innerhalb des Druckraumes (141;241) verschiebbar und unter dem Druck des Druckmediums ausschiebbar ist.

19. Vorrichtung nach einem der Ansprüche 16 - 18, **dadurch gekennzeichnet,** daß die Platte (140) oder die Membran (354) verformbar und unter dem Druck des Druckmediums vorwölbbar ist.

20. Vorrichtung nach Anspruch 19, **dadurch gekennzeichnet,** daß die Platte (140) aus einer Feder, z.B. einer Blattfeder, einer bistabilen und zum Druckraum (141) hin gewölbten Springfeder od.dgl. gebildet ist.

21. Vorrichtung nach einem der Ansprüche 14 - 16, **dadurch gekennzeichnet,** daß der Kolben (450) mittels einer Antriebseinrichtung (460), insbesondere eines Hydraulikzylinders (461), angetrieben ist.

22. Vorrichtung nach Anspruch 21, **dadurch gekennzeichnet,** daß der Hydraulikzylinder (461) mittels eines schnellen Servoventils (462) gesteuert ist.

23. Vorrichtung nach Anspruch 21 oder 22, **dadurch gekennzeichnet,** daß der Hub einstellbar ist, z.B. mittels auswechselbarer Zwischenlagen (471) begrenzbar ist.

24. Vorrichtung nach einem der Ansprüche 16 - 23, **dadurch gekennzeichnet,**daß der Kolben (250) an seinem Ende den Flächenteil (220) bildet.

25. Vorrichtung nach einem der Ansprüche 13 - 24, **dadurch gekennzeichnet,** daß der Flächenteil (20;120;220;320;420) an seiner in den Formraum (15;115;215;315;415) gelangenden Oberseite strömungsgünstig geformt ist, z.B. konvex gekrümmt ist.

26. Vorrichtung nach einem der Ansprüche 16 - 25, **dadurch gekennzeichnet,** daß der Kolben (450) im Werkzeugteil (411) verschiebbar geführt ist und mit seinem Ende (464) gegen eine fest eingespannte Membran (465) drückt und diese vorwölbt, die den ortsveränderbaren Flächenteil (420) aufweist.

27. Vorrichtung nach Anspruch 26, **dadurch gekennzeichnet,**daß die Membran ( 465) mittels eines am Werkzeugteil (411) auswechselbar gehaltenen Rahmens (466) randseitig kraft- und/oder formschlüssig gehalten ist.

28. Vorrichtung nach Anspruch 27, **dadurch gekennzeichnet,** daß die Membran (465) eine Wulst (468) aufweist, die in einer entsprechenden Aufnahme (469) des Rahmens (466) formschlüssig aufgenommen ist, oder umgekehrt.

29. Vorrichtung nach einem der Ansprüche 16 - 28, **dadurch gekennzeichnet,** daß der Einsatz (19;319;419) zumindest im Bereich seines ortsveränderbaren Flächenteiles (20;320;420) flexibel und bedarfsweise aufblasbar ausgebildet ist.

30. Vorrichtung nach Anspruch 29, **dadurch gekennzeichnet,** daß der Einsatz (19) mindestens eine Hohlkammer (28) enthält.

31. Vorrichtung nach Anspruch 29 oder 30, **dadurch gekennzeichnet,** daß der Einsatz (19;319; 419) aus einem Elastomer, z.B. Hartgummiteil, gebildet ist.

32. Vorrichtung nach einem der Ansprüche 13 - 31, **dadurch gekennzeichnet,** daß der Einsatz (319;419) eine elastische Membran (354;465), eine Rollmembran od.dgl., vorzugsweise aus einem Elastomer, aufweist.

33. Vorrichtung nach einem der Ansprüche 13 - 32, **dadurch gekennzeichnet,** daß der Einsatz (119;219), zumindest sein ortsveränderbarer Flächenteil (120;220), aus Metall, Kunststoff, Keramik od.dgl. gebildet ist.

34. Vorrichtung nach einem der Ansprüche 13 - 33, **dadurch gekennzeichnet,** daß der Einsatz (19;119;219;319;419), zumindest sein ortsveränderbarer Flächenteil (20;120;220;320;420), zumindest auf der dem Formraum (15;115;215;315;415) zugewandten Seite eine Verschleißschutzschicht (252), z.B. aus Kunststoff, Keramik od.dgl., aufweist.

35. Vorrichtung nach einem der Ansprüche 13 - 34, **dadurch gekennzeichnet,** daß der Druckraum (141;241;341) bzw. die Hohlkammer (28) an eine Gasdruckquelle angeschlossen ist.

36. Vorrichtung nach einem der Ansprüche 13 - 35, **dadurch gekennzeichnet,** daß der Einsatz (19;119;219;319;419) innerhalb einer Ausnehmung (21; 121;221;321;421) eines Werkzeugteiles (11;111;211;311; 411), insbesondere des Werkzeugoberteiles, mittels dessen die oberflächenabgewandte Bauteilrückseite (17) geformt wird, gehalten ist, z.B. mittels Hinterschnitts, mittels einer Schnappverbindung od.dgl.

37. Vorrichtung nach einem der Ansprüche 13 - 36, **dadurch gekennzeichnet,**daß der Einsatz (19;119;219;319;419) mit seinem mindestens einen ortsveränderbaren Flächenteil (20;120;220;320;420) im Normalzustand innerhalb der übrigen Formgebungskontur (13;113;213) dieses Werkzeugteiles (11;111;211;311;411) verläuft und im eine Reduzierung des Formraumquerschnittes bedingenden Verstellzustand über diese Formgebungskontur übersteht.

38. Vorrichtung nach einem der Ansprüche 13 - 37, **dadurch gekennzeichnet,** daß der Innendruck in dem Druckraum (141;241;341) bzw. in der Hohlkammer (28) zusammen mit dem Innendruck im Werkzeug (10;110;210;310) gesteuert wird, vorzugsweise mittels einer Hochgeschwindigkeitsregelung.

39. Vorrichtung nach Anspruch 38, **dadurch gekennzeichnet,** daß der Innendruck in dem Druckraum (141;241;341) bzw. in der Hohlkammer (28) zu Beginn des Formfüllvorganges größer und gegen Ende des Formfüllvorganges kleiner als der Innendruck des Werkzeuges (10;110;210;310) gewählt ist, wobei der mindestens eine Flächenteil (20;120;220;320) in diesem Normalzustand innerhalb der übrigen Formgebungskontur (13;113;213) dieses Werkzeugteiles (11;111;211;311) verläuft.

40. Vorrichtung nach einem der Ansprüche 13 - 39, **gekennzeichnet durch** eine Heizvorrichtung an bevorzugten Stellen des Werkzeuges (10;110;210;310; 410), insbesondere im Bereich des Einsatzes (19;119;219; 319;419).

41. Vorrichtung nach Anspruch 40, **dadurch gekennzeichnet,** daß die Heizvorrichtung dem Einsatz (19;119;219;319;419) zugeordnet ist und der Beheizung des Einsatzes dient.

42. Vorrichtung nach Anspruch 40 oder 41, **dadurch gekennzeichnet,** daß die Heizvorrichtung aus mindestens einem Heißkanal gebildet ist.

43. Vorrichtung nach Anspruch 40 oder 41, **dadurch gekennzeichnet,** daß die Heizvorrichtung als elektrische Heizung ausgebildet und vorzugsweise zeitabhängig steuerbar ist.

Fig. 1

Fig. 2

Fig. 3

Fig. 4

Fig. 5